# FASCICULE DE BREVET EUROPEEN

(11) **EP 2 928 989 B1**
(45) Date de publication et mention de la délivrance du brevet: **27.03.2024**
(21) Numéro de dépôt: 13802957.4
(22) Date de dépôt: 09.12.2013
(51) Int. Cl.: C10G 65/04, C10G 65/12, B01J 21/04, C10G 69/04, C10G 65/08, C10M 101/02, C10G 45/58, C10G 45/44, C10G 73/02, C10G 45/64, C10G 45/02, C10G 69/02, C10G 47/20, C10G 47/18, B01J 23/888, B01J 23/883, B01J 23/882, B01J 37/20

(54) **PROCÉDÉ D'OBTENTION DE SOLVANTS HYDROCARBONÉS DE TEMPÉRATURE D'ÉBULLITION SUPÉRIEURE À 300 °C ET DE POINT D'ÉCOULEMENT INFÉRIEUR OU ÉGAL À - 40 °C**
VERFAHREN ZUR GEWINNUNG VON KOHLENWASSERSTOFF-LÖSUNGSMITTELN MIT EINER SIEDETEMPERATUR ÜBER 300 °C UND EINEM STOCKPUNKT UNTER ODER GLEICH - 40 °C
METHOD FOR OBTAINING HYDROCARBON SOLVENTS HAVING A BOILING TEMPERATURE HIGHER THAN 300 °C AND A POUR POINT LOWER THAN OR EQUAL TO - 40 °C

(30) Priorité: 10.12.2012 FR 1261848
(43) Date de publication de la demande: 14.10.2015
(73) Titulaire: TotalEnergies OneTech, 92400 Courbevoie (FR)
(72) Inventeur: AUBRY, Christine, F-78160 Marly Le Roi (FR); GRASSO, Giacomo, B-1060 Bruxelles (BE); DATH, Jean Pierre, B-7970 Beloeil (BE)
(74) Mandataire: Hirsch & Associés
(86) Numéro de dépôt international: PCT/EP2013/075989
(87) Numéro de publication internationale: WO 2014/090757

(56) Documents cités:
- WO-A1-2011/061576
- FR-A1- 2 593 512
- FR-A1- 2 943 070
- US-A- 4 428 825
- US-A1- 2003 211 949
- US-B1- 6 340 430
- US-B1- 6 517 704

## Description

La présente invention a pour objet un procédé d'obtention de solvants hydrocarbonés dépourvus de composés aromatiques et de soufre, de température d'ébullition supérieure ou égale à 300°C et de température d'ébullition finale inférieure ou égale à 500°C et dont le point d'écoulement est fortement abaissé jusqu'à - 40°C et moins. Ce procédé est particulièrement adapté au traitement de coupes gazoles obtenues par distillation et raffinage du pétrole brut. La présente invention concerne également les produits obtenus par le procédé et enfin l'application comme solvant des dits produits, notamment dans des environnements froids nécessitant un point d'écoulement très bas. Ces solvants sont utilisables comme fluides de forage, lubrifiants pour l'industrie y compris automobile, le travail des métaux, comme entrant dans la composition de produits phytosanitaires, des encres et des huiles d'extension pour les mastics et les joints, et comme abaisseurs de viscosité pour formulations à base de résine et de pâtes à base de polychlorure de vinyle (PVC).

La nature chimique et la composition des fluides connus de l'homme du métier varient considérablement selon l'application envisagée et la matière d'origine des produits. Ainsi, certains sont d'origine pétrolière, d'autres sont issus de la chimie par polymérisation et/ou oligomérisation d'oléfines. Pour les produits d'origine pétrolière-, l'intervalle de distillation mesuré par l'ASTM D-86 ou ASTM D 2887 (choix selon le point initial ou final d'ébullition demandé en dessous de 270 °C ou au-dessus ou 400°C), le point d'écoulement mesuré par l'ASTM D 5950 (en référence à l'ASTM D97 3-points), la viscosité, la densité, les teneurs en soufre et en aromatiques, la densité, le point d'aniline mesuré par ASTM D-611, le mode de production de ces hydrocarbures, notamment la nature de la matière première distillée en coupes, et le point éclair constituent des caractéristiques importantes qui permettent de les distinguer et d'adapter ces produits aux différentes applications envisagées.

Ces fluides hydrocarbonés ont souvent des gammes de points d'ébullition étroites entre le Point initial d'ébullition (IBP) et le Point final d'ébullition (FBP). Ces gammes sont choisies en fonction de l'application envisagée. L'étroitesse de celles-ci permet de disposer d'un point d'inflammation et/ou point éclair précis, paramètres importants pour des raisons de sécurité. Une gamme de coupe étroite permet en outre d'obtenir une viscosité mieux définie, une stabilité améliorée de celle-ci et des caractéristiques d'évaporation adaptées aux applications nécessitant une étape de séchage de durée contrôlée: elle favorise également l'obtention de coupes hydrocarbonées de tension de surface mieux définie, dont le point d'aniline et le pouvoir solvant sont plus précis. Cependant ce ne sont pas toujours les seules à prendre en compte, d'autres pouvant être prioritaires selon les applications visées.

Pour être appliqués comme solvants dans différentes applications, ces fluides doivent être purifiés. La purification consiste typiquement en étapes d'hydrodésulfuration (et/ou hydrocraquage) et/ou d'hydrogénation pour réduire la teneur en soufre, la teneur en azote et/ou éliminer les hydrocarbures aromatiques, les oléfines et/ou cycles non saturés en les transformant en naphtènes. Les fluides hydrocarbonés ainsi purifiés sont majoritairement aliphatiques, ils contiennent des paraffines normales, des isoparaffines et des naphtènes. Pour ce type de fluide déaromatisé, le produit hydrocarboné qui a été désulfuré et/ou déazoté, puis fractionné, peut être hydrogéné pour saturer la totalité des hydrocarbures aromatiques qui sont présents. L'hydrogénation peut aussi être réalisée avant le fractionnement final.

Les utilisateurs ont d'abord recherché essentiellement des fluides hydrocarbonés contenant de faibles concentrations en hydrocarbures aromatiques et des teneurs en soufre extrêmement faibles, dont les coupes ont des points initiaux d'ébullition plus élevés pour tenir compte des conditions environnementales ou de sécurité.

Il est possible de traiter des gazoles issus de distillation directe dont le point final d'ébullition (FBP) est de 320°C pour obtenir des produits déaromatisés de point d'écoulement inférieur ou égal à 0°C. Le traitement de coupes de distillation de points finaux d'ébullition plus élevés, par exemple supérieurs à 350°C est tout aussi facile mais ne permet pas d'atteindre des points d'écoulement suffisamment bas dans la coupe lourde supérieure à 330°C après déaromatisation. En outre, la teneur en hydrocarbures aromatiques, notamment en polyaromatiques, est plus élevée. La présence de tels composés dans les hydrocarbures a des effets nocifs sur les catalyseurs d'hydrogénation dont la durée de vie est raccourcie et la performance limitée. Parfois, un traitement complémentaire d'hydrogénation est nécessaire pour diminuer encore la teneur en soufre de ces produits. Ainsi, le traitement de ces coupes grève notablement l'économie des procédés d'hydrogénation en augmentant considérablement la consommation d'hydrogène et les coûts de renouvellement du catalyseur qui se désactive rapidement.

Maintenant, ces fluides hydrocarbonés doivent en outre présenter un bon compromis entre une viscosité élevée et de bonnes propriétés à froid, c'est-à-dire un point d'écoulement très bas, par exemple inférieur à -25°C et même inférieur à -30°C, un pouvoir solvant élevé, notamment pour l'application encre d'imprimerie nécessitant la dissolution de résines, mais aussi des composés visqueux ou solides entrant dans la composition des fluides de forage. Ces fluides hydrocarbonés utilisés comme huiles d'extension pour la fabrication des mastics à base de silicone doivent également présenter une bonne compatibilité avec les polymères siliconés et aussi le pouvoir d'abaisser la viscosité de certains polymères comme les PVC lorsqu'ils sont utilisés dans la fabrication des pâtes PVC ou Plastisols. Ces fluides hydrocarbonés entrant également dans la composition de produits phytosanitaires doivent de même présenter une viscosité et un degré de pureté compatibles avec les contraintes de toxicité et de phytotoxicité qu'implique cet usage.

US 2003 211949 A1 traite d'un fluide ayant un point d'écoulement égal à -40 °C. US 6517704 B1 traite d'un procédé d'obtention de solvants hydrocarbonés comprenant une étape de déparaffinage et une étape d'hydrodéaromatisation.

Il est également connu d'obtenir ces fluides à partir de composés issus de la distillation sous vide, notamment de gazoles sous vide ou vapocraqués qui peuvent alors être soumis à d'autres procédés comme le craquage catalytique couplé à une hydrogénation (hydrodésulfuration, hydrodéaromatisation) comme il est décrit dans le brevet EP1447437 ou encore par hydrocraquage couplé à une hydrogénation, tels que décrits dans les brevets WO03/074634 et WO03/074635. Ces procédés d'hydrocraquage ou de craquage catalytique favorisent la concentration d'aromatiques, notamment d'aromatiques polycycliques dans les coupes 200 à 450°C en sortie de ces unités, ces aromatiques se transformant en naphtènes, plus particulièrement en naphtènes polycycliques très concentrés, par hydrogénation du cycle aromatique.

Cependant, les exigences en nouveaux fluides moins toxiques ou moins volatils de viscosité modérément élevée a conduit la demanderesse à utiliser comme fluides des hydrocarbures déparaffinés pour ses applications solvants comme il est décrit dans la demande de brevet WO2010/103245. Ces fluides sont obtenus à partir d'unités d'hydrodéparaffinage de différentes coupes gazoles issues d'autres unités de raffinage et de les distiller pour en faire des fluides hydrodéparaffinés aux intervalles de coupe appropriés, éventuellement après leur avoir fait subir des traitements de purification en vue de l'élimination du soufre et des hydrocarbures aromatiques. Ces fluides hydrodéparaffinés doivent satisfaire les mêmes caractéristiques de pureté que ceux requis pour les produits issus du pétrole brut comme la teneur en soufre mesurée par ASTM D5453 inférieure à 10 ppm, et une faible concentration en composés aromatiques, bien moins que 300 ppm. En outre ses caractéristiques sont identiques sinon meilleures que celles des produits issus du pétrole. Ces produits présentent un point final d'ébullition (FBP) supérieur à 300°C.

Cependant, tous les critères ne sont pas satisfaits sur toutes les coupes et en particulier sur les coupes de température initiale d'ébullition (IBP) supérieure à 300°C. En effet, bien que satisfaisant aux caractéristiques de teneur en soufre, de point éclair, d'aromatiques et de point d'aniline, ces coupes présentent un point d'écoulement très élevé souvent supérieur à -10°C, et même à 0°C ce qui les rend inutilisables dans un environnement froid à des températures inférieures à -25°C, et même inférieures à - 30°C. Ces coupes sont particulièrement recherchées pour les applications forage, encres et dans les matériaux type mastic.

Pour résoudre ce problème, la Demanderesse a décidé de mettre en oeuvre un procédé d'hydrodéparaffinage particulier consistant à améliorer le point d'écoulement de des coupes de température d'ébullition initiale (IBP) supérieure ou égale à 300°C déterminée par l'ASTM D 86, indépendamment des autres coupes.

Parmi les procédés d'hydrodéparaffinage, il existe deux procédés l'un favorisant la transformation des paraffines en isoparaffines par un procédé très isomérisant avec très peu de craquage des paraffines normales et l'autre basé sur le craquage doux des hydrocarbures traités, en particulier des paraffines normales.

Le procédé d'hydrodéparaffinage favorisant l'isomérisation des oléfines se fait en présence d'un catalyseur d'isomérisation à base de zéolithe, par exemple une ZSM5 supportant des métaux de transition ou une ZSM48 supportant des métaux de type platine/palladium à une température variant de 200 à 500°C sous une pression d'hydrogène variant de 25 à 200 bars. Le traitement d'hydrofinissage est obtenu également sous pression d'hydrogène en présence d'un catalyseur sur base d'oxydes métalliques supportant du nickel, du molybdène, du cobalt, du palladium, du tungstène et des couples de ces métaux.

Ces procédés d'hydrodéparaffinage très poussés sont utilisés pour la préparation de Diesel ou d'huiles hydrodéparaffinées à partir de coupes hydrocarbonées lourdes issues de l'unité de craquage catalytique des distillats sous-vide (craquage catalytique fluidisé (FCC (Fluid Catalytic Cracking)), telles que les coupes d'huiles légères de recyclage (LCO (Light Cycle Oil) ou de résidus du pétrole (slurry) ou encore de gazoles hydrocraqués permettant d'abaisser les points d'écoulement, sans pour autant atteindre des points d'écoulement inférieurs à -25°C, notamment sur les coupes au-delà de 300°C comme ceux décrits par exemple dans les demandes de brevets et brevets WO2009/154324, WO2009/011479, EP665283, US6517704 ou encore US6340430. On notera que ces traitements sont réalisés sur des coupes larges d'intervalles de coupe correspondant aux grades huiles et Diesel classiques, désirés. On obtient des coupes hydrocarbonées dites naphténiques mais dont la teneur en aromatiques est supérieure à 0,1% en poids, voire supérieure à 10% en poids (selon la méthode analytique IP391 : détermination par HPLC). Le traitement dit « d'hydrofinissage » utilisé après l'hydrodéparaffinage ne permet pas de convertir ces aromatiques en naphtènes. Dans ces procédés, l'hydrodéparaffinage « isomérisant » en présence de catalyseurs à base de platine/palladium sur support zéolithique/alumine est préféré à l'hydrodéparaffinage avec craquage.

Le procédé d'hydrodéparaffinage favorisant le craquage doux des paraffines normales à chaînes longues présentes dans la charge, est décrit dans les brevets US4781906, US4842717 et US5997727. Il vise l'abaissement comme l'autre procédé, du point d'écoulement des gazoles par traitement de la totalité de la coupe gazole en présence d'un catalyseur à base de silicalites supportant éventuellement du nickel et/ou un couple nickel/tungstène sous hydrogène à une température variant de 350 à 450°C et sous une pression de 1 à 80 bars. Ce procédé a été en particulier appliqué sur une coupe gazole de température d'ébullition supérieure à 300°C mais pour un intervalle de coupe excédent 100°C et l'abaissement du point d'écoulement n'a pas permis d'atteindre une température inférieure ou égale à -25°C, le point d'écoulement avoisinant seulement 0°C.

La présente invention vise l'abaissement du point d'écoulement à une température inférieure ou égale à 40°C, pour les solvants issus de coupes gazoles (GO) de point d'ébullition initial supérieur ou égal à 300°C et de température d'ébullition finale inférieure ou égale à 500 °C, déterminée selon la norme ASTM D 86 par la mise en oeuvre d'un procédé permettant de façon intégrée de produire des solvants déaromatisés de température d'ébullition supérieure à 300°C, de moins de 100°C d'intervalle de coupe et contenant moins de 500 ppm d'aromatiques, désulfurés à moins de 10 ppm de soufre et dont le pouvoir solvant mesuré par son point d'aniline est amélioré. L'invention vise également l'intégration du dit procédé dans un procédé de préparation de toutes les coupes utilisables comme solvant, de température d'ébullition comprise entre 200 et 500°C et d'intervalle de coupe inférieur à 100°C.

Dans la présente description de l'invention, les températures d'ébullition, points initiaux et finaux de distillation des coupes, sont mesurées selon la norme ASTM D 86.

La présente invention a donc pour objet un procédé d'obtention de solvants hydrocarbonés de teneur en soufre inférieure à 10 ppm, de teneur en aromatiques inférieure à 500 ppm, de température d'ébullition initiale supérieure ou égale à 300°C et de température d'ébullition finale inférieure ou égale à 500°C, déterminées selon la norme ASTM D86, pour un intervalle de coupe d'au plus 100°C, et de point d'écoulement inférieur à 40°C selon la norme ASTM D5950, le procédé étant selon la revendication 1

On entend par coupe 300°C+, les coupes distillant au-delà de 300°C selon la norme ASTM D 86.

Un tel procédé présente l'avantage de préparer des coupes hydrocarbonées lourdes de températures d'ébullition initiales supérieures à 300°C appelées coupes 300°C+, mais aussi de préparer concomitamment d'autres coupes de températures d'ébullition initiales inférieures à 300°C répondant aux spécifications des solvants hydrocarbonés sans aromatiques et sans soufre. Ce résultat est obtenu en intégrant des procédés connus dans un enchaînement nouveau permettant la séparation et le mélange des flux avant et après traitement.

On entend par charge constituée par une coupe gazole obtenue par tous procédés de raffinage, en particulier une coupe choisie parmi les gazoles de distillation atmosphérique, les gazoles de distillation sous vide, les gazoles hydrocraqués, les gazoles de craquage catalytique, les gazoles de viscoréduction, les gazoles de cokage, les gazoles issus de gaz de gisement, les gazoles désasphaltés, les gazoles issus de l'hydrotraitement des coupes lourdes (Résidu Atmosphérique et gazole de distillation sous vide ou VGO), les gazoles de teneur en soufre supérieure à 15 ppm étant nécessairement désulfurés par hydrotraitement et/ou hydrocraquage avant traitement selon le procédé de l'invention. On ne sortirait pas du cadre de l'invention si cette charge était issue de plusieurs coupes gazoles référencés dans la liste ci-dessus.

La coupe hydrocarbonée de température d'ébullition supérieure ou égale à 300°C est obtenue par séparation de la coupe gazole en deux coupes, une coupe légère (CI) de température finale d'ébullition inférieure à 300°C et au moins une coupe lourde (CL) de température initiale d'ébullition supérieure ou égale à 300°C, chaque coupe présentant un intervalle de température d'ébullition entre 300°C et 500°C et un intervalle de distillation de préférence inférieur à 85°C.

L'étape de déparaffinage traitant la dite coupe lourde (CL) comprend au moins une première section de craquage doux en présence d'un catalyseur à base de silicalite, choisi parmi les silicalites de rapport silice/alumine supérieur à 200 supérieur à 150, comprenant de 0 à 10 % en poids d'au moins un métal du groupe VIII et éventuellement de 0 à 10% en poids d'un métal du groupe VI, et une deuxième section d'hydrogénation des oléfines en présence d'un catalyseur qui est une alumine supportant un couple métallique choisi parmi les couples cobalt/molybdène, nickel/tungstène, cobalt/tungstène et nickel/molybdène.

Afin de ne pas favoriser le cokage de la charge et des effluents produits, ni même l'isomérisation des oléfines formées, l'étape de déparaffinage comprendra au moins deux sections de craquage doux alternées avec deux sections d'hydrogénation des oléfines formées au cours des dits craquages, le catalyseur de déparaffinage étant choisi parmi les silicalites de rapport silice/alumine supérieur à 200, ces silicalites supportant du nickel seul ou un couple nickel/tungstène et le catalyseur d'hydrogénation d'oléfines étant une alumine supportant un couple métallique choisi parmi les couples cobalt/molybdène, nickel/tungstène, cobalt/tungstène et nickel/molybdène. La première section de craquage permet de craquer les produits sans provoquer de formation de coke, la section d'hydrogénation permettant de saturer des oléfines produites, sans réaction secondaire d'isomérisation, la seconde section de craquage permet de continuer le craquage tandis que la dernière section d'hydrogénation est une section de finition pour la saturation des oléfines.

L'étape de déparaffinage est réalisée sous pression d'hydrogène, à une température variant de 150 à 450°C sous une pression totale variant de 10 à 400 bars, de préférence à une température variant de 280 à 380°C et une pression variant de 20 à 200 bars.

L'effluent déparaffiné obtenu à l'étape de déparaffinage est envoyé à l'étape de séparation supplémentaire placée avant l'étape d'hydrodéaromatisation. Cet effluent déparaffiné est séparé en au moins deux effluents, une coupe hydrocarbonée de C1 à C4 (hydrocarbures comprenant de 1 à 4 carbones), et une coupe déparaffinée (ou CDP) dont au moins une partie distille au-dessus de 300°C et présente un point d'écoulement inférieur ou égal à -40°C. On ne sortirait pas du cadre de l'invention, si les coupes séparées étaient plus nombreuses et ne correspondaient pas exactement aux coupes spécifiées ci-dessous.

L'effluent déparaffiné est séparé en deux coupes, trois coupes ou quatre coupes déparaffinées ;
- une coupe hydrocarbonée de C1 à C4 et une coupe hydrocarbonée de plus de 5 atomes de carbone (ou C5+),
- ou une coupe hydrocarbonée de C1 à C4 et deux coupes hydrocarbonées, l'une distillant de C5 à 150°C (ou C5-150 correspondant à une coupe essence) et l'autre distillant au-delà de 150°C (ou 150°C+),
- ou une coupe hydrocarbonée de C1 à C4 et trois coupes hydrocarbonées, la première distillant de C5 à 150°C (ou C5-150), la seconde distillant de 150 à 300°C (ou 150-300 correspondant à une coupe de gazole léger) et la troisième distillant au-delà de 300°C (ou 300°C+),

En ce qui concerne la coupe 300°C+, il peut s'agir d'une ou plusieurs coupes distillant au-delà de 300°C (ou 300°C+),

En sortie de l'étape de séparation supplémentaire, la coupe déparaffinée de température d'ébullition initiale la plus élevée issue de l'effluent déparaffiné est envoyée à l'étape d'hydrodéaromatisation, celle-ci comprenant une ou plusieurs sections d'hydrodéaromatisation.

Par exemple, si l'effluent déparaffiné est séparé en deux coupes seulement, la coupe hydrocarbonée de plus de 5 atomes de carbone (ou C5+) est envoyée à l'étape d'hydrodéaromatisation. Si l'effluent déparaffiné est séparé en trois coupes, la coupe distillant au-delà de 150°C (ou 150°C+) est envoyée à l'étape d'hydrodéaromatisation. Enfin, si l'effluent déparaffiné est séparé en quatre coupes, c'est la coupe distillant au-delà de 300°C (ou 300°C+) qui est envoyée à l'étape d'hydrodéaromatisation. Eventuellement, la coupe légère (Cl) issue de la séparation de la coupe gazole en deux coupes est mélangée en tout ou partie à la coupe déparaffinée envoyée à l'étape d'hydrodéaromatisation.

Cependant, dans une variante du dit procédé, les coupes (C5-150) et (150-300) pourraient être déaromatisées dans l'unité d'hydroaromatisation seules ou en mélange avec tout ou partie des autres coupes séparées dans la dite étape de séparation supplémentaire.

Dans une variante du procédé selon l'invention, la coupe lourde (CL) issue de la séparation de la coupe gazole en au moins deux coupes peut être envoyée pour une partie au moins à l'étape de déparaffinage, l'autre partie étant mélangée à la coupe déparaffinée récupérée à la sortie de l'étape de séparation de l'effluent déparaffiné et envoyée à l'étape d'hydrodéaromatisation. Cette variante permet notamment d'ajuster la température du point d'écoulement de la dite coupe. De préférence, la totalité de la coupe lourde (CL) est envoyée à l'étape de déparaffinage.

En sortie de la dernière étape de distillation atmosphérique, la coupe 300°C+ de point d'écoulement inférieur à -40°C est récupérée en totalité pour les applications envisagées ou au moins partiellement, une partie au moins pouvant être recyclée dans la coupe déparaffinée envoyée à l'étape d'hydrodéaromatisation, ce recycle permettant avantageusement de diminuer encore la teneur en aromatiques de cette coupe.

Dans un mode de réalisation du procédé de l'invention, les étapes de déparaffinage et hydrodéaromatisation sont réalisées dans une même capacité ou dans des capacités différentes. De préférence, ces étapes sont conduites à la même pression variant de 60 à 200 bars sous atmosphère d'hydrogène, à une température variant de 150 à 450°C, de préférence variant de 280 à 380°C pour l'étape de déparaffinage et à une température variant de 80 à 250°C pour l'étape d'hydrodéaromatisation, la température de l'effluent déparaffiné étant ajustée avant l'étape d'hydrodéaromatisation par injection d'au moins un composé liquide ou gazeux de température inférieure d'au moins 50°C à celle de l'effluent déparaffiné.

Pour cet ajustement de la température, le composé liquide ou gazeux est choisi parmi l'hydrogène, la coupe légère (Cl) issue de température d'ébullition inférieure à 300°C et la coupe 300°C+ de point d'écoulement inférieur à -25°C récupérée après distillation des effluents déparaffinés, éventuellement désulfurés, et déaromatisés.

Le dispositif de mise en oeuvre du procédé comprend :
- une unité de séparation (DF) en communication avec un réacteur de déparaffinage (R1) ;
- un réacteur de déparaffinage (R1) comportant au moins deux lits catalytiques pour la section de craquage doux (S1) et pour la section d'hydrogénation des oléfines (S2), ledit réacteur de déparaffinage étant alimenté par une coupe hydrocarbonée de température d'ébullition supérieure à 300°C (ou 300°C+) issue de l'unité de séparation (DF) en deux coupes 150°-300°C (ou 150-300) et 300°C+ par distillation d'une coupe gazole issue de tous procédés de raffinage du pétrole brut ;
- au moins un réacteur d'hydrodéaromatisation (R2) en communication avec d'une part le réacteur de déparaffinage (R1) et d'autre part au moins une tour de distillation atmosphérique (DA1),
- au moins une tour de distillation atmosphérique (DA1).

Dans un mode préféré, la coupe 300°C+ est issue d'une capacité de séparation (DF) disposée en amont du réacteur de déparaffinage (R1) séparant une coupe gazole issue de tous procédés de raffinage du pétrole brut, en deux coupes 150°-300°C (ou 150-300) et 300°C+.

Dans un mode préféré, le dispositif de mise en oeuvre du procédé selon l'invention comprend une unité de séparation en deux coupes ou plus (DA2) disposée sur la conduite de sortie des effluents issus du réacteur de déparaffinage (R1).

Par exemple, l'effluent déparaffiné peut être distillé dans l'unité de distillation DA2 en deux coupes, trois coupes ou quatre coupes déparaffinées ;
- une coupe hydrocarbonée de C1 à C4 et une coupe hydrocarbonée de plus de 5 atomes de carbone (ou C5+),
- ou une coupe hydrocarbonée de C1 à C4 et deux coupes hydrocarbonées, l'une distillant de C5 à 150°C (ou C5-150) et l'autre distillant au-delà de 150°C (ou 150°C+)
- ou une coupe hydrocarbonée de C1 à C4 et trois coupes hydrocarbonées, la première distillant de C5 à 150°C (ou C5-150), la seconde distillant de 150 à 300°C (ou 150-300) et la troisième distillant au-delà de 300°C (ou 300°C+).

Dans un mode particulier de l'invention, les réacteurs de déparaffinage et d'hydrodéaromatisation constituent un seul même réacteur, les lits catalytiques étant répartis en deux sections, la section de déparaffinage (SR1) et la section de déaromatisation (SR2), ces deux sections étant séparées par une cavité (30) permettant le mélange de l'efffluent déparaffiné avec les composés liquides ou gazeux destinés à ajuster la température des effluents entrant dans la section de déaromatisation. Cette cavité (30) peut être vide ou remplie en tout ou partie par des matériaux inertes favorisant le mélange des gaz et des liquides.

Ces effluents sont choisis de préférence parmi l'hydrogène et/ou le recycle des coupes CI et/ou 300°C+ de point d'écoulement inférieur à -25°C récupérés après la tour de distillation atmosphérique (DA1).

Un second objet de l'invention est la coupe 300°C+ obtenue selon le procédé de l'invention, de point d'écoulement inférieur à -40°C de point initial d'ébullition supérieur à 300°C et de température finale d'ébullition inférieure ou égale à 500°C, d'intervalle de coupe inférieur à 100°C, de teneur en soufre inférieure à 10 ppm et de teneur en aromatiques inférieure à 500 ppm et qui contient plus de 30% en poids de composés naphténiques et moins de 5% en poids de normales paraffines. Les composés mononaphténiques représentent plus de 20% du poids des composés naphténiques.

De préférence, cette coupe présente un intervalle de coupe inférieur ou égal à 85°C, de préférence une teneur en soufre inférieure à 5ppm et une teneur en aromatiques inférieure à 300 ppm, ces préférences pouvant être atteintes indépendamment les unes des autres ou en combinaison.

Bien entendu par coupe 300°C+ récupérée on entend une ou plusieurs coupes 300°C+, de température d'ébullition comprises entre 300°C et 450°C et de largeur de coupe inférieure ou égale à 75°C, de préférence inférieure à 65°C.

Ces ou cette coupe(s) 300°C+ comprennent moins de 35% en poids d'hydrocarbures ayant une longueur de chaîne supérieure à 22 atomes de carbone, et plus de 65% en poids d'hydrocarbures ayant une longueur de chaîne inférieure à 22 atomes de carbone.

Dans un mode de réalisation, la coupe 300°C+ présente un point initial d'ébullition supérieur ou égal à 330°C.

Dans un mode de réalisation, la coupe 300°C+ présente un pourcentage de naphtènes polycycliques inférieur à 20%, de préférence inférieur à 10%.

Un troisième objet de l'invention est l'utilisation de la (ou des) coupe(s) 300°C+ comme solvant dans les applications phytosanitaires, encres et mastic ou encore comme fluide pour le travail des métaux. Ces applications nécessitent des points d'écoulements bas tout en présentant des qualités de pureté et de caractère non VOC (ou volatil organic compounds en français composés organiques volatiles) important pour des utilisations en milieux domestiques.

Pour décrire l'invention de façon plus précise, des figures représentant les différentes formes de mise en oeuvre de l'invention sont données en appui à la présente description.

La figure 1 représente un dispositif de mise en oeuvre du procédé de l'invention, pour lequel deux réacteurs séparés (R1) et (R2) sont représentés respectivement pour les étapes de déparaffinage et de déaromatisatrion.

La figure 2 représente un dispositif de mise en oeuvre du procédé de l'invention pour lequel un seul réacteur est représenté renfermant deux sections distinctes, (SR1) et (SR2) respectivement pour les étapes de déparaffinage et de déaromatisatrion, une cavité (30) séparant ces dites sections.

La figure 3 représente les sections de craquage doux et d'hydrotraitement contenues dans le réacteur de déparaffinage R1 ou SR1 dans les figures 1 et 2.

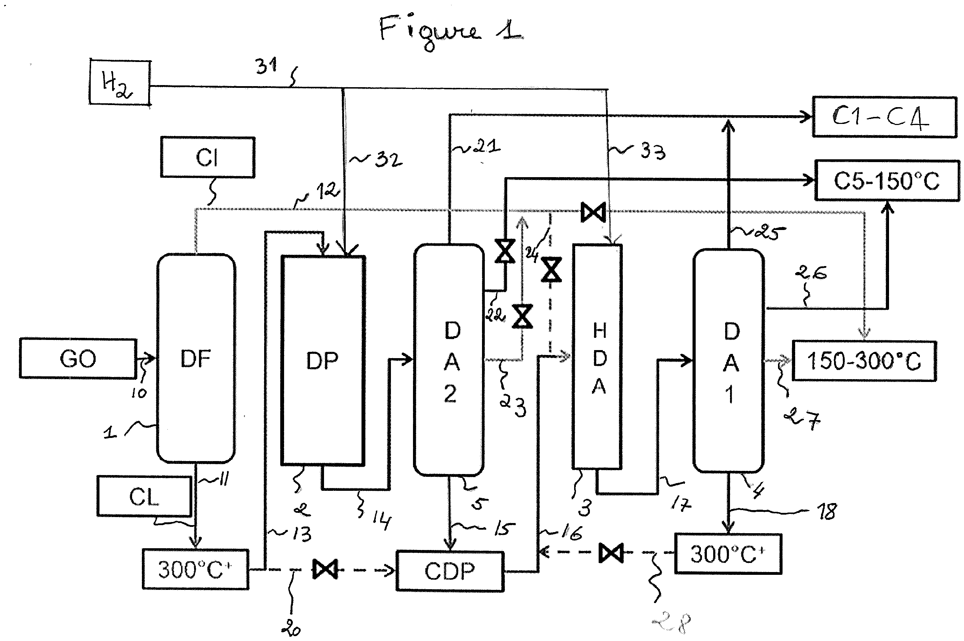

Dans la figure 1, une charge de gazole (GO) issue de tous procédés de raffinage du pétrole brut est introduite par la conduite (10) dans le séparateur permettant une distillation fractionnée DF référencé (1) où elle est séparée en deux coupes, une coupe légère (CI) évacuée de DF par la conduite (12) et une coupe lourde CL évacuée de DF par la conduite (11).

Cette coupe lourde CL est envoyée dans le réacteur de déparaffinage R1 référencé (2) alimenté en parallèle par de l'hydrogène arrivant par les conduites (31), puis (32). La totalité de l'effluent déparaffiné est dirigée par la conduite (14) dans une unité de distillation atmosphérique DA2 référencée (5). Deux, trois ou quatre effluents sont distillés selon le choix de valorisation envisagé, seule la coupe déparaffinée CDP évacuée par la conduite (15) est envoyée à l'étape de déaromatisation.

Par exemple, l'effluent déparaffiné peut être distillé dans l'unité de distillation DA2 en deux coupes, trois coupes ou quatre coupes déparaffinées ;
- une coupe hydrocarbonée de C1 à C4 encore appelée "fuel gas" évacuée par la conduite (21) et une coupe hydrocarbonée de plus de 5 atomes de carbone (ou C5+) évacuée par la conduite (15) vers le réacteur R2 de déaromatisation référencé (3),
- ou une coupe hydrocarbonée de C1 à C4 évacuée par la conduite (21) et deux coupes hydrocarbonées, l'une distillant de C5 à 150°C (ou C5-150) évacuée par la conduite (22) et l'autre distillant au-delà de 150°C (ou 150°C+) évacuée par la conduite (15) vers le réacteur R2 de déaromatisation référencé (3),
- ou une coupe hydrocarbonée de C1 à C4 évacuée par la conduite (21) et trois coupes hydrocarbonées, la première distillant de C5 à 150°C (ou C5-150) évacuée par la conduite (22), la seconde distillant de 150 à 300°C (ou 150-300) évacuée par la conduite (23) et la troisième distillant au-delà de 300°C (ou 300°C+ évacuée par la conduite (15) vers le réacteur R2 de déaromatisation référencé (3).

La coupe CDP évacuée par la conduite (15) est envoyée par la conduite (16) dans le réacteur R2 référencé (3) alimenté parallèlement par de l'hydrogène issu de la conduite (31) via la conduite (33).

L'effluent déparaffiné et déaromatisé est récupéré en sortie du réacteur R2 (3) par la conduite (17) et dirigé vers une unité de distillation DA1 référencée (4) pour y être distillé en au moins quatre coupes :
- la (ou les) coupes 300°C+ récupérées via la conduite (18),
- la coupe (150-300) évacuée par la conduite (27),
- la coupe (C5-150) évacuée par la conduite (26),
- et la coupe C1-C4 ou "fuel gas" évacuée par la conduite (25).

Dans un certain mode de mise en oeuvre, la coupe légère récupérée par la conduite (12) en sortie du séparateur DF (1) peut être introduite en tout ou partie via la conduite (24) dans l'effluent CDP avant son entrée dans le réacteur R2 (3).

En outre, les coupes (C5-150) en sortie des distillations DA1 et DA2 peuvent être avantageusement mélangées de même que les coupes (150-300) avec tout ou partie de la coupe légère CI dans la conduite (12) puis en sortie de la distillation DA1 (4).

Dans certains modes préférés, la coupe lourde CL en sortie du séparateur DF (11) n'est envoyée que partiellement vers le réacteur R1 (2), une partie de la dite coupe envoyée par la conduite (20) étant mélangée avec l'effluent déparaffiné CDP.

De même, si la teneur en aromatiques est trop élevée dans la coupe 300°C+ ou que la viscosité de l'effluent CDP est insuffisante, une partie de la coupe 300°C+ en sortie de la distillation DA1 (4) est recyclée via la conduite (28) dans la conduite (16) dirigeant l'effluent CDP dans le réacteur R2 (3).

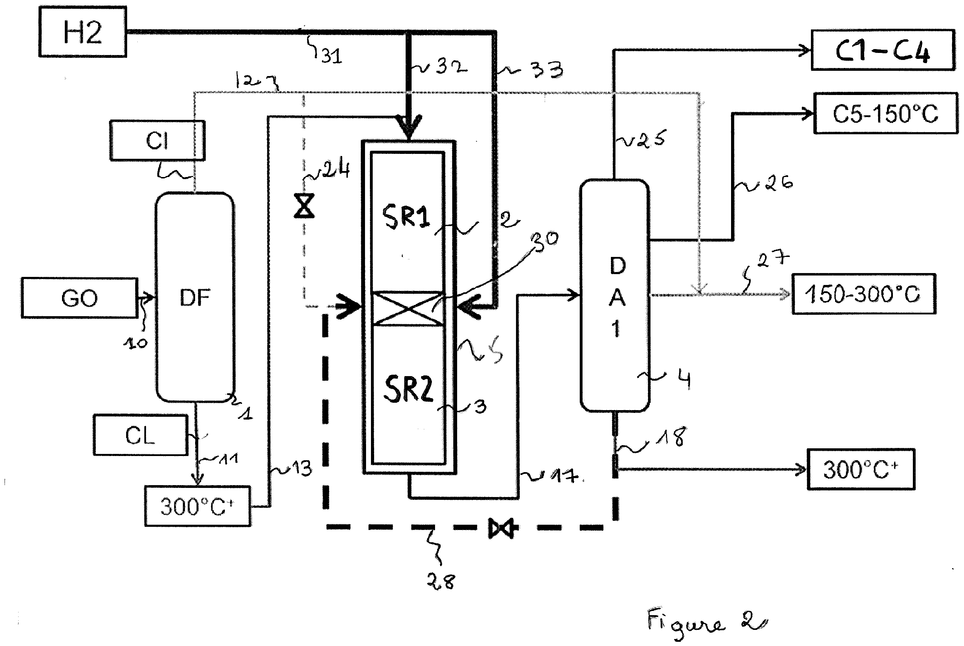

La figure 2 se différencie de la figure 1 en ce qu'un seul réacteur (5) est représenté pour les étapes de déparaffinage et de déaromatisation contenant deux sections, une de déparaffinage SR1 référencée (2) et une section de déaromatisation SR2 référencée (3) ces deux sections étant séparées par une cavité (30). Dans cette figure, une charge de gazole (GO) issue de tous procédés de raffinage du pétrole brut est introduite par la conduite (10) dans le séparateur DF référencé (1) où elle est séparée en deux coupes, une coupe légère (CI) évacuée de DF (1) par la conduite (12) et une coupe lourde CL évacuée de DF (1) par la conduite (11).

La coupe lourde CL est envoyée dans la section SR1 (2) du réacteur (5) alimenté en parallèle par de l'hydrogène arrivant par les conduites (31), puis (32) pour y être déparaffinée. Toute la coupe déparaffinée est envoyée vers la section SR2 (3), éventuellement après avoir été mélangée dans la cavité (30) séparant les deux sections avec de l'hydrogène complémentaire arrivant par la conduite (33). Cette injection d'hydrogène est utile à la réaction de déaromatisation mais a aussi pour fonction d'ajuster la température d'entrée de la charge ou coupe déparaffinée dans la section SR2 (3) par trempe (ou quench) permettant d'abaisser la température en entrée de la section SR2 (3).

Dans un mode particulier de l'invention, il est également possible d'injecter tout ou partie de la coupe légère (Cl) via la conduite (24) dans la cavité (30) pour être déaromatisée comme la coupe lourde (CL) déparaffinée. La quantité d'hydrogène sera ajustée en conséquence ainsi que la température d'entrée dans la section SR2 (3).

Comme dans la figure 1, l'effluent déparaffiné et déaromatisé est récupéré en sortie du réacteur (5) par la conduite (17) et dirigé vers une unité de distillation DA1 référencée (4) pour y être distillé en au moins quatre coupes :
- la (ou les) coupes 300°C+ récupérées via la conduite (18),
- la coupe (150-300) évacuée par la conduite (27),
- la coupe (C5-150) évacuée par la conduite (26),
- et la coupe C1-C4 ou "fuel gas" évacuée par la conduite (25).

De même, si la teneur en aromatiques est trop élevée dans la (ou les) coupe(s) 300°C+, une partie de la coupe 300°C+ en sortie de la distillation DA1 (4) est recyclée via la conduite (28) dans la cavité (30) du réacteur (5) pour y être une nouvelle fois déaromatisée dans la section SR2 du dit réacteur (5).

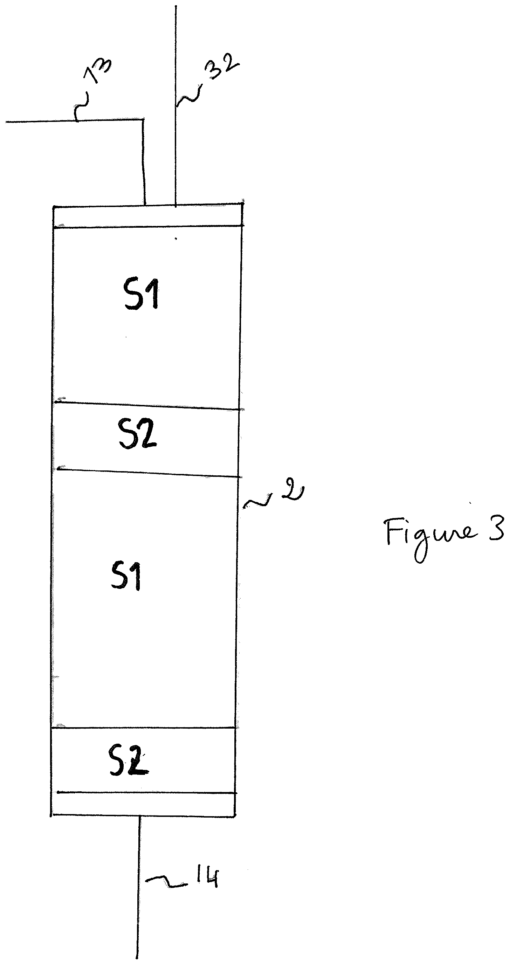

La figure 3 représente une coupe du réacteur de déparaffinage (2) de la figure 1 ou de la section de déparaffinage SR1(2) du réacteur (5). Cette coupe présente la répartition en couches des catalyseurs de déparaffinage (S1) et d'hydrotraitement (S2). S1 est choisi parmi les catalyseurs d'hydrodéparaffinage à craquage doux, sur base silicalite supportant du nickel et éventuellement du tungstène comme le KF1102 commercialisé par la société ALBEMARLE. S2 est un catalyseur d'hydrotraitement classique sur base d'alumine supportant un couple métallique choisi parmi les couples cobalt/molybdène, nickel/tungstène, cobalt/tungstène et nickel/molybdène. S2 peut être du KF647 vendu également par ALBEMARLE. Dans un mode préféré de l'invention, la première et la troisième couches sont remplies de catalyseur S1 de déparaffinage et constituent les plus gros volumes (31% et 46% volume). Les deuxième et quatrième couches ne sont remplies que de S2 occupant chacune un volume de 11,5 %. Dans cette figure 3, la coupe lourde (CL) à déparaffiner est introduite dans le réacteur (2) de la figure 1 par la conduite (13), l'hydrogène est injecté par la conduite (32) et l'effluent déparaffiné est récupéré par la conduite (14).

Les performances de la présente invention vont être maintenant illustrées dans la suite de la présente description, mais ces exemples ne viseront pas à en limiter la portée.

### EXEMPLE 1

Le présent exemple décrit la préparation d'une coupe déparaffinée et déaromatisée selon l'invention, de température initiale d'ébullition supérieure à 300°C et dont le point d'écoulement est inférieur à -30°C.

On opère comme décrit dans la figure 1 en utilisant dans le réacteur de déparaffinage (2) les catalyseurs décrits ci-dessus pour la figure 3. Dans le réacteur de déaromatisation, on utilise un catalyseur nickel sur alumine, la quantité de nickel étant supérieure à 10% en poids et la surface spécifique étant supérieure à 140mm²/g.

La température de réaction dans le réacteur de déparaffinage est de 305 °C sous une pression de 30 barg, avec une Vitesse Volume Horaire (VVH) définie correspondant au ratio débit de volume de charge (m3/h) sur volume de catalyseur (m3/h) de 1h⁻¹ et une couverture d'hydrogène de 250 NI (NL : litre normal) d'hydrogène par litre de charge hydrocarbonée. Dans le réacteur de déaromatisation, la température est de 245 °C, sous une pression de 160 barg, une couverture d'hydrogène de 250 NI d'hydrogène par litre de charge hydrocarbonée et un vvh de 0,4 h⁻¹. Les caractéristiques des produits depuis le début à la fin de la chaîne de réaction sont données dans le tableau 1 ci-après.

**TABLEAU 1**

| Caractéristiques | GO avant DF | Coupe 300°C+ | | |
|---|---|---|---|---|
| | | Avant R1 (2) | Après DA2 | Après R2 et DA1 |
| % poids Aromatiques | 17,5 | 9,8 | 13,8 | 127ppm |
| % poids n-paraffines | 21,5 | 27,7 | 6,3 | 4,5 |
| % poids Isoparaffines | 35 | 38,4 | 42,7 | 47,1 |
| % poids Naphtènes totaux | 25,8 | 24,1 | 34,4 | 48,3 |
| % poids mononaphtenes | 20,8 | 23,2 | - | 35,8 |
| % poids oléfines ASTM D2710 (gBr₂/100g échantillon) | 0,52 | 0,35 | 0,7 | <0,05 |
| % poids Saturés<C9 | <0,09 | 0 | <0,1 | <0,1 |
| Viscosité à 40°C (mm²/s), ASTM D445 | 4,5 | 7,7 | 8,7 | 8,7 |
| Soufre (ppm) ASTM D5453 | 2 | 2,4 | 3,9 | <1 |
| Azote (ppm) par chemiluminescence | <0,5 | <0,5 | <0,5 | <0,5 |
| Coupe distillation (°C) ASTM D86 | 236-365 | 296,8- 369,3 | 327,9- 371,4 | 314-367,3 |
| Point d'écoulement (°C) ASTM D5950 en référence à D97 (3-points) | -4 | + 12 | -40 | -40 |
| Point d'aniline (°C) ASTM D-611 | - | - | - | 98,7 |

On constate donc que par le procédé de l'invention, on obtient des fluides hydrocarbonés dépourvus d'aromatiques et de tous types de polluants, utilisables comme solvant, de coupe de distillation supérieure à 300°C et dont le point d'écoulement est égal à - 40 °C. On notera que la quantité en naphtènes est très supérieure à 40% en poids dans ces hydrocarbures, la quantité en mononaphtènes étant très supérieure à 20% en poids. Les dits polluants correspondent notamment aux oléfines, aux composés soufrés et aux composés azotés.

### EXEMPLE 2

Le présent exemple compare les caractéristiques des produits obtenus dans l'exemple 1 référencé X avec celles des produits obtenus à partir d'hydrodéparaffinage majoritairement isomérisant de coupes gazoles ou un gazole hydrocraqué et hydrodéaromatisé. Ces produits issus de l'art antérieur sont référencés respectivement T1 et T2.

Les caractéristiques comparées sont données dans le tableau 2 ci-après.

**TABLEAU 2**

| Caractéristiques | X | T1 | T2 |
|---|---|---|---|
| ppm en poids des aromatiques | 127 | 264 | 70 |
| % poids n-paraffines | 4,5 | 0,1 | 16 |
| % poids Isoparaffines | 47,1 | 74,2 | 59,9 |
| % poids Naphtènes totaux | 48,3 | 24,8 | 24,1 |
| % poids mononaphtenes | 35,8 | 18,9 | 22,4 |
| Soufre (ppm) par méthode UV | <1 | <1 | <1 |
| Viscosité à 40°C (mm²/s), ASTM D445 | 8,7 | 10,3 | 6,1 |
| Coupe distillation (°C), ASTM D86 | 314-367 | 334-378 | 305-347 |
| Point d'écoulement (°C), ASTM D5950 en référence à D97 (3-points) | -40 | -35 | 0 |
| Point d'aniline (°C), ASTM D611 | 98,7 | 108 | 101 |

On notera que le déparaffinage permet de diminuer le point d'écoulement de la coupe de point d'ébullition supérieure à 300°C à -40 °C. On notera que comparativement entre les coupes X et T1, la teneur en mononaphtènes est très différente, pour X celle-ci étant supérieur à 20% et même supérieure à 30% en poids tandis qu'elle reste très inférieure à 20% en poids pour T1. La réduction du point d'aniline pour la coupe X indique une amélioration du pouvoir solvant.

## Revendications

1. Procédé d'obtention de solvants hydrocarbonés de teneur en soufre inférieure à 10 ppm, de teneur en aromatiques inférieure à 500 ppm, de température d'ébullition initiale supérieure ou égale à 300°C et de température d'ébullition finale inférieure ou égale à 500°C, déterminées selon la norme ASTM D86, pour un intervalle de coupe d'au plus 100°C, et de point d'écoulement inférieur ou égal à -40°C selon la norme ASTM D5950 comprenant les étapes :
- de déparaffinage (2) d'une coupe hydrocarbonée de température d'ébullition supérieure ou égale à 300°C issue de la distillation (DF) d'une coupe gazole en deux coupes, une coupe légère (CI) de température d'ébullition inférieure à 300°C et au moins une coupe lourde (CL) de température d'ébullition initiale et finale supérieures ou égales à 300°C,
la coupe gazole étant choisie parmi les gazoles de distillation atmosphériques, les gazoles de distillation sous vide, les gazoles hydrocraqués, les gazoles de craquage catalytique, les gazoles de viscoréduction, les gazoles de cokage et les gazoles désasphaltés, les gazoles de teneur en soufre supérieure à 15 ppm étant désulfurés par hydrotraitement et/ou hydrocraquage, et récupération de tout ou partie de l'effluent déparaffiné (14), l'étape de déparaffinage comprenant au moins deux sections de craquage doux (S1) alternées avec deux sections d'hydrogénation (S2) des oléfines, les sections de craquage doux comprenant un catalyseur à base de silicalite choisi parmi les silicalites de rapport silice-alumine supérieur à 200, comprenant de 0 à 10% en poids d'au moins un métal du groupe VIII, et éventuellement de 0 à 10% en poids d'un métal du groupe VI, ces silicalites supportant du nickel seul ou un couple nickel/tungstène, les sections d'hydrogénation des oléfines comprenant un catalyseur qui est une alumine supportant un couple métallique choisi parmi les couples cobalt/molybdène, nickel/tungstène, cobalt/tungstène et nickel/molybdène,
l'étape de déparaffinage étant obtenue sous pression d'hydrogène, à une température variant de 150 à 450°C sous une pression totale variant de 10 à 400 bars,
- d'hydrodéaromatisation (3) de tout ou partie de l'effluent déparaffiné, en présence d'un catalyseur comprenant du nickel sur base alumine, à une pression variant de 60 à 200 bars et une température variant 80 et 250°C, le dit effluent déparaffiné étant préalablement désulfuré si sa teneur en soufre est supérieure à 15 ppm, et en cas d'hydrodéaromatisation partielle, l'effluent déparaffiné est envoyé dans une étape de séparation (DA2) avant d'atteindre l'étape d'hydrodéaromatisation, l'effluent déparaffiné étant séparé en au moins deux effluents qui sont une coupe hydrocarbonée de C1 à C4 (21) et au moins une coupe déparaffinée (15) dont une partie distillant à au moins 300°C présente un point d'écoulement inférieur ou égal à -40°C,
- de récupération de la coupe déparaffinée, éventuellement désulfurée, et déaromatisée,
- de distillation (DA1) de ladite coupe déparaffinée et déaromatisée pour la séparer en deux coupes, trois coupes ou quatre coupes déparaffinées ;
- une coupe hydrocarbonée de C1 à C4 (21) et une coupe hydrocarbonée de plus de 5 atomes de carbone (15),
- ou une coupe hydrocarbonée de C1 à C4 (21) et deux coupes hydrocarbonées, l'une distillant de C5 à 150°C (22) et l'autre distillant au-delà de 150°C (15),
- ou une coupe hydrocarbonée de C1 à C4 (21) et trois coupes hydrocarbonées, la première distillant de C5 à 150°C (22), la seconde distillant de 150 à 300°C et la troisième distillant à partir de 300°C (15),
- et enfin de récupération d'au moins une coupe distillant à une température d'au moins 300°C (300°C+) de point d'écoulement inférieur ou égal à -40°C utilisable comme solvant, cette coupe présentant un intervalle de distillation inférieur à 100°C.

2. Procédé selon la revendication 1, **caractérisé en ce que** l'étape de déparaffinage est obtenue à une température variant de 280 à 380°C et une pression variant de 20 à 200 bars.

3. Procédé selon l'une des revendications précédentes, **caractérisé en ce que** la coupe déparaffinée de température de distillation initiale la plus élevée issue de l'effluent déparaffiné est envoyée à l'étape d'hydrodéaromatisation, celle-ci comprenant une ou plusieurs sections d'hydrodéaromatisation.

4. Procédé selon l'une des revendications précédentes, **caractérisé en ce que** la coupe 300°C+ de point d'écoulement inférieur ou égal à -40°C récupérée après la dernière étape de distillation atmosphérique est récupérée en totalité ou partiellement en recyclant (28) au moins une partie dans la coupe déparaffinée envoyée à l'étape d'hydrodéaromatisation.

5. Procédé selon l'une des revendications 1 à 4, **caractérisé en ce que** les étapes de déparaffinage et d'hydrodéaromatisation sont réalisées dans un même réacteur, les lits catalytiques étant séparés par une cavité (30) permettant le mélange de l'effluent déparaffiné avec les composés liquides ou gazeux, hydrogène ou recycle des coupes Cl (24) et 300°C+ de point d'écoulement inférieur ou égal à -40°C récupérée (28) après la tour de distillation atmosphérique (DA1).

6. Coupe (300°C+) de point d'écoulement inférieur ou égal à -40°C, de température initiale d'ébullition supérieure à 300°C et de température finale d'ébullition inférieure ou égale à 500°C, d'intervalle de coupe inférieur à 100°C, de teneur en soufre inférieure à 10 ppm et de teneur en aromatiques inférieure à 500 ppm obtenue par le procédé selon l'une des revendications 1 à 5 **caractérisée en ce qu'**elle contient plus de 30% en poids de composés naphténiques, et moins de 5% en poids de normales paraffines, les composés mononaphténiques représentant plus de 20% du poids des composés naphténiques.

7. Utilisation de la coupe selon la revendication 6, comme solvant dans les applications phytosanitaires, encres et mastic ou encore comme fluide pour le travail des métaux.

## Patentansprüche

1. Verfahren zur Gewinnung von KohlenwasserstoffLösungsmitteln mit einem Gehalt an Schwefel von weniger als 10 ppm, mit einem Gehalt an Aromaten von weniger als 500 ppm, mit einer Anfangssiedetemperatur über oder gleich 300 °C und mit einer Endsiedetemperatur unter oder gleich 500 °C, bestimmt gemäß der Norm ASTM D86, für ein Fraktionsintervall von höchstens 100 °C, und mit einem Stockpunkt unter oder gleich -40 °C gemäß der Norm ASTM D5950, umfassend die Schritte:
- Entparaffinieren (2) einer Kohlenwasserstofffraktion mit einer Siedetemperatur über oder gleich 300 °C aus der Destillation (DF) einer Gasölfraktion in zwei Fraktionen, einer leichten Fraktion (CI) mit einer Siedetemperatur unter 300 °C und mindestens einer schweren Fraktion (CL) mit einer Anfangs- und Endsiedetemperatur über oder gleich 300 °C,
wobei die Gasölfraktion ausgewählt wird aus den Gasölen einer atmosphärischen Destillation, den Gasölen einer Destillation im Vakuum, den hydrogekrackten Gasölen, den Gasölen eines katalytischen Krackens, den Gasölen eines Visbreakings, den Gasölen eines Verkokens und den deasphaltieren Gasölen, wobei die Gasöle mit einem Gehalt an Schwefel von mehr als 15 ppm durch eine Hydrobehandlung und/oder Hydrokracken entschwefelt werden, und Gewinnen des gesamten oder eines Teils des entparaffinierten Abflusses (14), wobei der Entparaffinierungsschritt mindestens zwei Sektionen eines sanften Krackens (S1) umfasst, abgewechselt mit zwei Hydrierungssektionen (S2) von Olefinen, wobei die Sektionen des sanften Krackens einen Katalysator auf der Basis von Silicalit umfassen, ausgewählt aus den Silicaliten mit einem Verhältnis Siliciumdioxid-Aluminiumoxid von mehr als 200, umfassend von 0 bis 10 Gew.-% mindestens eines Metalls der Gruppe VIII, und gegebenenfalls von 0 bis 10 Gew.-% eines Metalls der Gruppe VI, wobei diese Silicalite Nickel allein oder ein Paar Nickel/Wolfram tragen, wobei die Hydrierungssektionen von Olefinen einen Katalysator umfassen, der ein Aluminiumoxid ist, das ein Metallpaar trägt, ausgewählt aus den Paaren Kobalt/Molybdän, Nickel/Wolfram, Kobalt/Wolfram und Nickel/Molybdän,
wobei der Entparaffinierungsschritt unter Wasserstoffdruck bei einer Temperatur, die von 150 bis 450 °C variiert, unter einem Gesamtdruck, der von 10 bis 400 bar variiert, erhalten wird,
- Hydrodearomatisieren (3) des gesamten oder eines Teils des entparaffinierten Abflusses in Gegenwart eines Katalysators, umfassend Nickel auf der Basis von Aluminiumoxid, bei einem Druck, der von 60 bis 200 bar variiert, und einer Temperatur, die von 80 bis 250 °C variiert, wobei der genannte entparaffinierte Abfluss zuvor entschwefelt wird, wenn sein Gehalt an Schwefel größer als 15 ppm ist, und im Fall eines teilweisen Hydrodearomatisierens der entparaffinierte Abfluss zu einem Trennschritt (DA2) geschickt wird, bevor der Hydrodearomatisierungsschritt erzielt wird, wobei der entparaffinierte Abfluss in mindestens zwei Abflüsse getrennt wird, die eine C1-C4-Kohlenwasserstofffraktion (21) und mindestens eine entparaffinierte Fraktion (15) sind, wovon ein Teil, der bei mindestens 300 °C destilliert, einen Stockpunkt unter oder gleich -40 °C aufweist,
- Gewinnen der entparaffinierten, gegebenenfalls entschwefelten, und dearomatisierten Fraktion,
- Destillieren (DA1) der genannten entparaffinierten und dearomatisierten Fraktion, um sie in zwei entparaffinierte Fraktionen, drei entparaffinierte Fraktionen oder vier entparaffinierte Fraktionen zu trennen;
- eine C1-C4-Kohlenwasserstofffraktion (21) und eine Kohlenwasserstofffraktion mit mehr als 5 Kohlenwasserstoffatomen (15),
- oder eine C1-C4-Kohlenwasserstofffraktion (21) und zwei Kohlenwasserstofffraktionen, wobei die eine C5 bei 150 °C (22) destilliert und die andere jenseits von 150 °C (15) destilliert,
- oder eine C1-C4-Kohlenwasserstofffraktion (21) und drei Kohlenwasserstofffraktionen, wobei die erste C5 bei 150 °C (22) destilliert, die zweite von 150 bis 300 °C destilliert, und die dritte ab 300 °C (15) destilliert,
- und schließlich Gewinnen mindestens einer Fraktion, die bei einer Temperatur von mindestens 300 °C (300 °C+) destilliert, mit einem Stockpunkt unter oder gleich -40 °C, die als Lösungsmittel verwendbar ist, wobei diese Fraktion ein Destillationsintervall von weniger als 100 °C aufweist.

2. Verfahren nach Anspruch 1, **dadurch gekennzeichnet, dass** der Entparaffinierungsschritt bei einer Temperatur, die von 280 bis 380 °C variiert, und einem Druck, der von 20 bis 200 bar variiert, erhalten wird.

3. Verfahren nach einem der vorhergehenden Ansprüche, **dadurch gekennzeichnet, dass** die entparaffinierte Fraktion mit der höchsten Anfangsdestillationstemperatur aus dem entparaffinierten Abfluss zu dem Hydrodearomatisierungsschritt geschickt wird, wobei dieser eine oder mehrere Hydrodearomatisierungssektionen umfasst.

4. Verfahren nach einem der vorhergehenden Ansprüche, **dadurch gekennzeichnet, dass** die Fraktion 300 °C+ mit dem Stockpunkt unter oder gleich -40 °C, die nach dem letzten Schritt einer atmosphärischen Destillation gewonnen wird, zur Gänze oder teilweise durch Recyclieren (28) mindestens eines Teils in der entparaffinierten Fraktion gewonnen wird, die zum dem Hydrodearomatisierungsschritt geschickt wird.

5. Verfahren nach einem der Ansprüche 1 bis 4, **dadurch gekennzeichnet, dass** der Entparaffinierungs- und Hydrodearomatisierungsschritt in demselben Reaktor durchgeführt werden, wobei die katalytischen Betten durch einen Hohlraum (30) getrennt sind, der das Mischen des entparaffinierten Abflusses mit den flüssigen oder gasförmigen Verbindungen, Wasserstoff oder der Rückführung der Fraktionen CI (24) und 300 °C+ mit einem Stockpunkt unter oder gleich -40°C, die nach der atmosphärischen Destillationskolonne (DA1) gewonnen werden (28), gestattet.

6. Fraktion (300 °C+) mit einem Stockpunkt unter oder gleich -40 °C, mit einer Anfangssiedetemperatur über 300 °C und einer Endsiedetemperatur unter oder gleich 500 °C, mit einem Fraktionsintervall unter 100 °C, einem Gehalt an Schwefel von weniger als 100 ppm und mit einem Gehalt an Aromaten von weniger als 500 ppm, welche durch das Verfahren nach einem der Ansprüche 1 bis 5 erhalten wird, **dadurch gekennzeichnet, dass** sie mehr als 30 Gew.-% Naphthen-Verbindungen und weniger als 5 Gew.-% normale Paraffine enthält, wobei die Mononaphthen-Verbindungen mehr als 20 Gew.-% der Naphthen-Verbindungen ausmachen.

7. Verwendung der Fraktion nach Anspruch 6, als Lösungsmittel in phytosanitären, Tinten- oder Mastix-Anwendungen oder auch als Fluid zur Bearbeitung von Metallen.

## Claims

1. A method for producing hydrocarbon solvents having a sulfur content of less than 10 ppm, aromatic hydrocarbon content of less than 500 ppm, an initial boiling point higher than or equal to 300 °C and final boiling point lower than or equal to 500 °C, as determined according to the standard ASTM D86, for a fraction interval of a maximum of 100 °C, and pour point lower than -25 °C according to the standard ASTM D5950, comprising the following steps of:
- dewaxing (2) of a hydrocarbon fraction having initial boiling point higher than 300 °C derived from the distillation (DF) of a gas oil fraction into two fractions, one light fraction (Cl) having the final boiling point below 300 °C and at least one heavy fraction (CL) having the initial boiling point higher than or equal to 300 °C,
the gas oil fraction being selected from among the atmospheric distillation gas oils, vacuum distillation gas oils, hydrocracked gas oils, gas oils from catalytic cracking, gas oils from visbreaking, coking gas oils, deasphalted gas oils, gas oils with a sulfur content greater than 15 ppm being desulphurised by hydrotreating and / or hydrocracking, and recovery of all or part of the dewaxed effluent (14), the step of dewaxing comprising at least two mild cracking sections (S1) alternating with olefin hydrogenation sections (S2) the mild cracking sections comprising a silicalite based catalyst, selected from silicates having a silica / alumina ratio greater than 200, comprising 0% to 10% by weight of at least one metal from group VIII, and possibly 0% to 10% by weight of a metal from Group VI ; these silicalites being able to support nickel alone or a nickel / tungsten combination, the olefin hydrogenation sections comprising a catalyst which is an alumina supporting a metal combination selected from among the cobalt / molybdenum, nickel / tungsten, cobalt / tungsten and nickel / molybdenum combinations,
the step of dewaxing being carried out under hydrogen pressure, at a temperature ranging from 150 °C to 450 °C and a pressure ranging from 10 to 400 bar,
- hydrodearomatisation (3) of all or part of the dewaxed effluent, in the presence of a catalyst comprising nickel on an alumina base, at a pressure ranging from 60 to 200 bar and a temperature ranging from 80 °C to 250 °C, and said dewaxed effluent being possibly previously desulphurised in advance if its sulfur content is greater than 15 ppm, and in the case of partial dewaxing, the dewaxed effluent sent to the additional separation step (DA2) before reaching the step of hydrodearomatisation, the dewaxed effluent being separated into at least two effluents, one hydrocarbon fraction of C1 to C4 (21), and at least one dewaxed fraction (15) of which at least one part distills above 300 °C and has a pour point lower than or equal to -40 °C,
- recovery of the dewaxed fraction, possibly desulphurised, and dearomatised,
- distillation (DA1) of the said dewaxed and dearomatised fraction, to separate it into two dewaxed fractions, three dewaxed fractions or four dewaxed fractions;
- one hydrocarbon fraction of C1 to C4 (21) and one hydrocarbon fraction of more than 5 carbon atoms (15);
- or one hydrocarbon fraction of C1 to C4 (21) and two hydrocarbon fractions, one of C5 distilling at 150°C (22) and the other distilling above 150 °C (15),
- or one hydrocarbon fraction of C1 to C4 (21) and three hydrocarbon fractions, the first one of C5 distilling at 150 °C (22), the second distilling from 150 °C to 300 °C and the third distilling above 300 °C (15),
- and finally recovery of at least one fraction distilling at a temperature of at least 300°C (300 °C+) having pour point lower than -40 °C that is usable as solvent, this fraction having a distillation interval lower than 100 °C.

2. A method according to claim 1, **characterised in that** the step of dewaxing is carried out under hydrogen pressure, at a temperature ranging from 280 °C to 380 °C and a pressure ranging from 20 to 200 bar.

3. The method according to one of the preceding claims, **characterised in that** the dewaxed fraction with the highest initial distillation boiling point derived from the dewaxed effluent is sent to the step of hydrodearomatisation, the latter comprising of one or more hydrodearomatisation sections.

4. The method according to one of the preceding claims, **characterised in that** the 300 °C+ fraction with pour point lower than -40 °C recovered after the last step of atmospheric distillation is recovered in its entirety or partially, by recycling (28) at least a part in the dewaxed fraction sent to the step of hydrodearomatisation.

5. The method according to one of claims 1 to 4, **characterised in that** the steps of hydrodearomatisation and dewaxing are conducted in the same reactor, the catalyst beds being separated by a cavity (30) allowing for the mixing of the dewaxed effluent with the liquid or gaseous compounds, hydrogen or the recycle of the Cl (24) and / or 300 °C+ fractions with pour point lower than -40°C recovered (28) after the atmospheric distillation tower (DA1).

6. A (300 °C+) fraction having pour point lower than - 25 °C, initial boiling point higher than 300 °C and final boiling point lower than or equal to 500 °C, with fraction interval lower than 100°C, having a sulfur content of less than 10 ppm and with content of aromatic hydrocarbons less than 500 ppm, obtained by the method according to one of claims 1 to 5, **characterised in that** it contains more than 30% by weight of naphthenic compounds, and less than 5% by weight of normal paraffins, and the mono naphthenic compounds represent more than 20% by weight of the naphthenic compounds.

7. Use of the fraction according to claim 6, as a solvent in applications related to phytosanitary products, inks and sealant putty or even as a fluid for metal working.
